# EUROPÄISCHE PATENTSCHRIFT

(11) **EP 3 378 318 B1**
(45) Veröffentlichungstag und Bekanntmachung des Hinweises auf die Patenterteilung: **24.02.2021**
(21) Anmeldenummer: 17162494.3
(22) Anmeldetag: 23.03.2017
(51) Int. Cl.: A01N 65/08, A01N 25/02, A01P 21/00

(54) **VERWENDUNG EINES WÄSSRIGEN AUSZUGS AUS DIPSACUS FULLONUM ZUR KEIMHEMMUNG ODER ZUR ERTRAGSSTEIGERUNG VON KARTOFFELPFLANZEN**
USE OF AN AQUEOUS EXTRACT OF DIPSACUS FULLONUM FOR INHIBITING THE GERMINATION OR FOR YIELD INCREASE OF POTATO PLANTS
UTILISATION D'UN EXTRAIT AQUEUX DE DIPSACUS FULLONUM POUR INHIBER LA GERMINATION OU POUR AUGMENTER LE RENDEMENT DE PLANTES DE POMMES DE TERRE

(43) Veröffentlichungstag der Anmeldung: 26.09.2018
(73) Patentinhaber: Hanisch, Horst, 29584 Himbergen (DE)
(72) Erfinder: Hanisch, Horst, 29584 Himbergen (DE)

(56) Entgegenhaltungen:
- WO-A1-2017/007950
- CARRAZ ET AL: "Antiproliferative activity and phenotypic modification induced by selected Peruvian medicinal plants on human hepatocellular carcinoma Hep3B cells", JOURNAL OF ETHNOPHARMACOLOGY, Bd. 166, 2015, Seite 185-199, XP002769536,
- GIOLITTI, FABIAN ET AL: "Dipsacus fullonum : an alternative host of sunflower chlorotic mottle virus in Argentina", J. PHYTOPATHOL., Bd. 157, Nr. 5, 2009, Seiten 325-328, XP002769537,
- Marie-Luise Stettler: "Wildkräuter & Wildpflanzen: Wilde Karde (Dipsacus fullonum)", Garten Weden, das wedische Magazin, 1 August 2011 (2011-08-01), pages 22-24, XP55580552, Switzerland Retrieved from the Internet: URL:http://www.lebensharmonie.ch/docs/w_ka rde_artikel.pdf [retrieved on 2019-04-12]
- .: "TEASEL Dipsacus fullonum", Herbalpedia, 1 January 2006 (2006-01-01), pages 1-2, XP55588720, Silver Spring, PA, U.S.A. Retrieved from the Internet: URL:https://www.herbworld.com/learningherb s/TEASEL.pdf [retrieved on 2019-05-15]
- Maria Jose Ruiz-Chancho ET AL: "Occurrence of methylated arsenic species in parts of plants growing in polluted soils", INTERNATIONAL JOURNAL OF ENVIRONMENTAL ANALYTICAL CHEMISTRY, vol. 91, no. 9, 10 August 2011 (2011-08-10), pages 844-855, XP55588752, GB ISSN: 0306-7319, DOI: 10.1080/03067310903243944
- H Drangmeister: "Kartoffelanbau D2 Spezieller Pflanzenbau", Informationsmaterialien über den ökologischen Landbau (Landwirtschaft einschließlich Wein-, Obst- und Gemüsebau) für den Unterricht an landwirtschaftlichen Berufsund Fachschulen, 1 January 2011 (2011-01-01), pages 1-26, XP55588950, Deutschland Retrieved from the Internet: URL:https://www.oekolandbau.de/fileadmin/r edaktion/oeko_lehrmittel/Fachsschulen_Agra r/Landwirtschaft/Aktualisierung_2012/flwmd 02_21_2011.pdf [retrieved on 2019-05-15]

## Beschreibung

Maßnahmen zur Keimhemmung von Kartoffeln sind eine unumgängliche Notwendigkeit zur Qualitätssicherung im Kartoffelanbau. Dies ergibt sich aus dem Sachverhalt, dass die natürliche Keimung von Kartoffeln erst bei Temperaturen unter 2 °C ausbleibt. Bei dieser Temperatur entstehen jedoch reduzierende Zucker, die bei zu frittierenden Kartoffeln eine braune Farbe und süßen Geschmack hervorrufen. Die optimale Lagertemperatur zur Vermeidung von Qualitätseinbußen liegt jedoch je nach Sorte und Verwendungszweck bei 5 bis 10 °C. Voraussetzung für eine Lagerung unter diesen Bedingungen ist somit eine künstliche Keimhemmung.

Es ist bekannt, dass sich die Keimung von Kartoffeln während der Lagerung durch Chemikalien hemmen oder gar verhindern lässt.

Mit dem chemischen Produkt Ethylen steht ein Pflanzenschutzmittel zur Verfügung, das auf Grundlage einer Zulassung des deutschen Bundesamtes für Verbraucherschutz und Lebensmittelsicherheit für die Keimhemmung von Kartoffeln genutzt werden kann. Breite Anwendung hat dieses Verfahren bislang nicht gefunden.

Die Behandlung von Kartoffeln erfolgt nach der Ernte bei Einlagerung oder nach Lagerbeginn durch Spritzen, durch Stäuben oder durch Anwendung von Heißnebelverfahren.

Wichtig ist eine ausreichende Wirkstoffmenge für eine Initialwirkung, wobei eine sortenabhängige Verträglichkeit berücksichtigt werden muss. Eine Zweitbehandlung kann erforderlich werden. Da Pflanzkartoffeln nicht mit dem Keimhemmungsmittel kontaminiert werden dürfen, müssen diese getrennt von den zu behandelnden Kartoffeln gelagert werden.

Von großer praktischer Bedeutung sind Keimhemmungsmittel auf Basis des schon seit Jahrzehnten bekannten Wirkstoffs Chlorpropham, siehe z.B. EP1604570. Bei bereits gekeimten Kartoffeln steigt durch Chlorpropham allerdings die Gefahr der Innenkeimung. Einschränkend ist, dass Chlorpropham nur bei konventionell angebauten Kartoffeln, nicht dagegen bei Bioware, verwendet werden darf. Es besteht Kennzeichnungspflicht und die Notwendigkeit einer Rückstandsüberwachung. Beim Verzehr von mit Chlorpropham-Präparaten behandelten Kartoffeln ist zu berücksichtigen, dass Chlorpropham auch in das Innere der Kartoffeln eindringt. Somit reicht ein Waschen oder Schälen zur Entfernung der Substanz nicht aus. Hinsichtlich der Umweltwirkungen ist darauf hinzuweisen, dass Chlorpropham im Erdboden nur mit moderater Geschwindigkeit abgebaut wird. Überdies werden gesundheitsschädliche Wirkungen diskutiert.

Eine Kombinationsbehandlung mit Chlorpropham und Dimethylnaphthalin ist ebenfalls beschrieben, siehe US6,310,004.

Ein neueres Verfahren zur Keimhemmung von Kartoffeln wurde mit der Verwendung von Maleinsäurehydrazid als Wirkstoff eingeführt. In Deutschland stehen mehrere vom Bundesamt für Verbraucherschutz und Lebensmittelsicherheit zugelassene Präparate zur Verfügung. Für Pflanzkartoffeln besteht jedoch keine Zulassung.

Maleinsäurehydrazid ist ein bekannter Wirkstoff (für eine Zusammenfassung siehe auch Klein et al., 1984; Journal of Food Biochemistry 8(1); p: 55-66). Die Substanz wird seit 1952 im Pflanzenanbau eingesetzt und ist seit 2004 in der EU als Bestandteil von Pflanzenschutzmitteln zugelassen.

Die Anwendung von Keimhemmungsmitteln auf Basis von Maleinsäurehydrazid erfolgt durch Spritzapplikation im Freiland.

Bei der Applikation sind einige sehr wichtige Einflussgrößen zu berücksichtigen. So muss zum Zeitpunkt des Einsatzes die Zellteilung der Kartoffelknollen abgeschlossen sein. Andernfalls ergeben sich Ertragseinbußen. Da der Wirkstoff über das Blattwerk der Kartoffeln aufgenommen wird, können nur intakte grüne Bestände behandelt werden. Die Behandlung muss mehrere Wochen vor der Krautabtötung erfolgen. Die Anwendung ist auf Temperaturen unter 25 °C begrenzt. Niederschläge oder Bewässerung sind erst nach 24 h ohne nachteilige Auswirkung. Zu erwähnen ist auch die Rückstandsproblematik. Drangmeister (Kartoffelanbau D2 Spezieller Pflanzenbau; https://www.oekolandbau.de/fileadmin/redaktion/oeko_lehrmittel/ Landwirtschaft/Aktualisierung_2012/flwmd02 21_2011.pdf) offenbart ackerbauliche Verfahren zur Ertragssteigerung bei Kartoffeln.

Auch Naturstoffe, wie zum Beispiel spezielle ätherische Öle, bewirken eine Keimhemmung bei Kartoffeln. Verwiesen sei auf Öle aus Menthaarten (DE 3 713 198 A1, EP 0 287 946 A2), Rapsölmethylester (DE 4 318 673 A1, EP 0 653912 B1) und Terpenverbindungen aus Ölen aromatischer Pflanzen (EP 1 267 623 A1). Auch Kümmelextrakte werden eingesetzt (EP 2 533 632 B1, FR 1 050 863). WO2017/007950 offenbart die keimhemmende Wirkung von *Brassica juncea* Extrakten auf Kartoffeln.

Die keimhemmende Wirkung ist bei den Naturstoffpräparaten weniger stark ausgeprägt als bei den oben genannten chemischen Wirkstoffen. Vorteilhaft ist, dass Naturstoffpräparate auch im ökologischen Kartoffelanbau eingesetzt werden können.

Trotz der Vorteile haben aus Naturstoffen hergestellte Keimhemmungsmittel bisher allerdings keine nennenswerte Bedeutung erlangt. Offensichtlich erfüllen die verfügbaren Mittel noch nicht die Erwartungen potentieller Anwender.

Aus der Praxis des Kartoffelanbaus ergeben sich für ein geeignetes Keimhemmungsmittel vielfältige Anforderungen an die Verarbeitungseigenschaften:
Wasserlösliche Keimhemmungsmittel können, wenn erforderlich, ohne besondere Maßnahmen in Wasser gelöst oder mit Wasser verdünnt werden. Überdies sollte das Mittel einfach zu applizieren sein. Einfache Applikationsmethoden umfassen das Tauchen, das Besprühen oder, besonders vorteilhaft, die automatische Sprühbenetzung beim Pflanzen der Kartoffeln mit einem herkömmlichen Kartoffeleinleger mit einer ebenfalls herkömmlichen Beizeinrichtung. Vorteilhafterweise ist die Applikation weiterhin, im Gegensatz zu vielen bekannten Keimhemmungsmitteln, vom Wachstum und Reifegrad der Kartoffeln sowie von den Witterungsbedingungen unabhängig.

Nicht zuletzt sollten Keimhemmungsmittel keine nachteilige Wirkung auf den Ernteertrag haben und keine oder nur sehr geringe Rückstände auf oder in den behandelten Kartoffeln hinterlassen.

Daher besteht Bedarf an einem wirksamen Keimhemmungsmittel, welches einfach anzuwenden ist und ein verbessertes Rückstandsmanagement ermöglicht. Diese Aufgabe wird zumindest zum Teil durch die vorliegende Erfindung gelöst, die durch die angehängten Ansprüche charakterisiert wird.

In einer ersten Ausführungsform bezieht sich die Erfindung auf ein Verfahren gemäß den Ansprüchen, welches einen wässrigen Auszug aus Dipsacus fullonum beinhaltet.

Die folgenden bevorzugten Ausführungsformen können auf die erfindungsgemäße Verwendung und das erfindungsgemäße Verfahren gleichermaßen angewendet werden.

Dipsacus fullonum, auch Wilde Karde genannt, ist eine zweijährige krautige Pflanze, für die bislang ausschließlich pharmakologische Wirkungen beschrieben sind. So wurde die Wurzel der Wilden Karde in der Volksheilkunde gegen Gelbsucht und Leberbeschwerden, Magenkrankheiten, Gerstenkörner, Fisteln, Hautflechten und Nagelgeschwüren sowie bei kleinen Wunden empfohlen. Eine beschriebene Behandlung gegen Borreliose konnte bislang nicht verifiziert werden.

Zur Herstellung eines wässrigen Auszugs werden üblicherweise 30 bis 300 g, vorzugsweise 50 bis 200 g, noch mehr bevorzugt 50 bis 150 g, z.B. 50, 70, 100, 120, 150, 180 oder 200 g getrocknetes Pflanzenmaterial oder 50 bis 400 g, bevorzugt 80 bis 300 g, weiter bevorzugt 100 bis 250 g, z.B. 100, 120, 150, 180 oder 200 g Frischmaterial pro Liter Wasser, vorzugsweise destilliertes Wasser für 2 bis 14, z.B. 3, 4, 5, 6, 7, 8, 9, 10, 11, 12, 13 oder 14 Tage eingelegt und der Überstand anschließend abgenommen und optional filtriert. Der Auszug kann bei Raumtemperatur gelagert werden.

Vorzugsweise wird das Pflanzenmaterial vor Einlegen in Wasser zerkleinert.

Im Zusammenhang mit der vorliegenden Erfindung wurde überraschend festgestellt, dass ein wässriger Auszug aus Dipsacus fullonum die Keimung von Knollenpflanzen wie z.B. Kartoffeln wirksam und dauerhaft unter Lagerbedingungen hemmen kann. Hierbei ist bemerkenswert, dass die Keimhemmung nicht an den behandelten Kartoffeln, sondern erst eine Generation später an den aus den behandelten Kartoffeln hervorgehenden Tochterknollen auftritt. Dies ändert die Art der Behandlung im Vergleich zu bekannten Keimhemmungsmitteln, indem nämlich das vorliegende Keimhemmungsmittel bereits vor der Pflanzung der Mutterknolle auf die Knolle aufgebracht wird.

Überdies hat sich bei der Kultivierung der mit dem Auszug behandelten Kartoffeln herausgestellt, dass der Ertrag gegenüber dem aus unbehandelten Kartoffeln um bis zu 70% höher ausfiel.

Abhängig von der Sorte, der Art der Applikation des Mittels auf die Knollen der Knollenpflanze wie z.B. der Kartoffeln, und von der Konzentration und Menge an Auszug kann eine Ertragssteigerung bis zu 80% erhalten werden. Üblich ist eine Ertragssteigerung zwischen 10 und 80%, bevorzugt zwischen 20 und 70%, weiter bevorzugt zwischen 30 und 70%, z.B. mindestens 25%, mindestens 30%, mindestens 40%, mindestens 50%, mindestens 60%, bis zu 70% oder bis zu 80%.

Ohne auf eine wissenschaftliche Theorie beschränkt werden zu wollen, wird vermutet, dass ein oder mehrere Wirkstoffe aus der Pflanze, die sich im wässrigen Auszug wiederfinden, die Keimhemmung bewirken, die sich erst in der ersten Tochtergeneration ausprägt. Hierfür können unterschiedliche Wirkprinzipien verantwortlich sein, die jedoch noch erforscht werden müssen. Die beanspruchte Wirkung ergibt sich jedenfalls eindeutig aus den Beispielen 5 und 6. Ob dies dieselben sind, die auch für die Ertragssteigerung verantwortlich sind, bleibt ebenfalls zu erforschen.

In einer bevorzugten Ausführungsform ist der Auszug vorwiegend aus Samen, Kraut und/oder Wurzeln hergestellt.

Vorwiegend bedeutet im Zusammenhang mit der vorliegenden Erfindung, dass mindestens 50%, bevorzugt mindestens 60% oder 70%, weiter bevorzugt mindestens 80 oder 90% des verwendeten Pflanzenmaterials aus mindestens einem der obengenannten Pflanzenteilen stammt. Hierbei kann es sich sowohl um Mischungen aus Pflanzenmaterial aus zwei oder mehr der o.g. Pflanzenteile handeln als auch um reine Auszüge aus einem der o.g. Pflanzenteile.

Im Zusammenhang mit der vorliegenden Erfindung hat sich herausgestellt, dass Auszüge aus einem oder mehrerer dieser Pflanzenteile sowohl die Keimung der Tochtergeneration jener Kartoffeln hemmen, mit denen sie in Kontakt gebracht wurden, als auch eine Ertragssteigerung in der Tochtergeneration bewirken.

In einer bevorzugten Ausführungsform der erfindungsgemäßen Verfahren enthält der wässrige Auszug direkt nach der Extraktion kein organisches Lösungsmittel, insbesondere keine Alkohole, insbesondere kein Methanol, Ethanol oder Propanol. Insbesondere bei der weiter unten beschriebenen Anwendung zur Ertragssteigerung kann der wässrige Auszug mit Alkohol weiterbehandelt werden und der erhaltene Überstand hierzu verwendet werden.

Es sind z.B. alkoholische Auszüge aus Dipsacus fullonum für andere Anwendungen beschrieben. Überraschenderweise ist die Verwendung oder Anwesenheit eines organischen Lösungsmittels wie Alkohole für die vorliegend gefundenen Wirkungen nicht notwendig.

Die vorliegende Erfindung bezieht sich also auf ein Verfahren zur Keimhemmung von Knollen einer Kartoffelpflanze, umfassend Aufbringen eines Auszugs aus Dipsacus fullonum auf mindestens eine Mutterknolle und die Gewinnung von Tochterknollen aus der Mutterknolle wie in den Ansprüchen beschrieben.

Überdies bezieht sich die Erfindung auf ein Verfahren zur Ertragssteigerung von Knollen einer Kartoffelpflanze, umfassend Aufbringen eines Auszugs aus Dipsacus fullonum auf mindestens eine Knolle.

Das Aufbringen oder in Kontakt Bringen des Auszugs mit den Kartoffelknollen kann auf jegliche mögliche Art und Weise erfolgen. Beispielhaft seien Sprühen, Tauchen und Vernebelung genannt.

In einer bevorzugten Ausführungsform erfolgt das Aufbringen des Auszugs mittels Tauchen oder Besprühen. Bei einer Sprühbehandlung wird die Kartoffelknolle vor dem Aufbringen ins Feld mit einem Auszug aus Dipsacus fullonum besprüht. Hierbei wird mindestens 80%, weiter bevorzugt mindestens 90%, am meisten bevorzugt mindestens 95%, z.B. 96, 97, 98, 99 oder 100% der Oberfläche der Knolle beim Sprühvorgang benetzt. Als Richtwert kann ein Verhältnis von ausgebrachtem Auszug in g zum Gewicht der Knolle in g von 0,4% bis 1,5%, bevorzugt von 0,5% bis 1%, z.B. 0,6%, 0,7%, 0,8% oder 0,9% gelten. Dieser Wert kann jedoch in Abhängigkeit von der Art der Knolle sowie den Umweltbedingungen bei der Pflanzung variieren.

Beim Tauchvorgang sollen mindestens 50%, bevorzugt mindestens 60, mindestens 70 oder mindestens 80%, weiter bevorzugt mindestens 90% der Oberfläche der Knolle mit einem Auszug aus Dipsacus fullonum benetzt werden. Hierbei beträgt die Eintauchzeit in den Auszug üblicherweise zwischen 10 und 60 Sekunden, bevorzugt zwischen 20 und 50 Sekunden, z.B. 25, 30, 35, 40 oder 45 Sekunden, kann jedoch je nach Knollenart und Umweltbedingungen höher oder niedriger sein.

In einer weiteren bevorzugten Ausführungsform erfolgt das Aufbringen mittels Vernebelung, insbesondere Kaltvernebelung oder Heißvernebelung.

Bei der Kaltvernebelung wird mittels eines Kompressors ein Aerosol erzeugt und in den zu vernebelnden Raum abgegeben. Bei der Heißvernebelung wird mittels eines mit z.B. Benzin betriebenen Thermalnebelgerätes betrieben. Hierbei wird ein Gemisch aus Benzin und Luft in einer Kammer gezündet und durch ein Resonatorrohr gedrückt. Kurz vor dem Auslass wird der Wirkstoff, in diesem Fall der Auszug aus Dipsacus fullonum, beigemischt.

Eine einmalige Behandlung durch Aufbringen oder in Kontakt Bringen ist bevorzugt, allerdings kann eine zweite oder sogar eine dritte Behandlung unter Umständen notwendig sein. Mindestens die erste Behandlung sollte vor dem Ausbringen der Knolle ins Erdreich erfolgen. Hierbei kann die Behandlung sowohl direkt vor dem Ausbringen der Knolle ins Erdreich als auch Tage oder Wochen vorher, sogar direkt nach der Ernte der Saatknollen erfolgen. Bevorzugt erfolgt die letzte Behandlung vor dem Aufbringen möglichst nahe vor der Pflanzung, z.B. höchstens 14 Tage, höchstens 10 Tage, höchstens 7 Tage oder höchstens 5 Tage vor der Pflanzung.

In einer anderen bevorzugten Ausführungsform erfolgt das Aufbringen als Beizung vor dem Ausbringen der Knolle ins Erdreich. Die Beizung kann auf eine der weiter oben beschriebenen Weisen erfolgen.

In einer weiteren bevorzugten Ausführungsform erfolgt das Aufbringen mittels in Kontakt Bringen über den Anbau von Dipsacus fullonum auf einem Feld vor Anbau der Kartoffelpflanze. Hierbei kann die angebaute Pflanze geerntet werden oder auch auf dem Acker verbleiben, so dass mindestens ein Teil ihrer Inhaltsstoffe verfügbar gemacht wird. Wie aus Beispiel 12 hervorgeht, tritt die Ertragssteigerung auch ein, wenn die Knollen in Erdreich eingebracht werden, in welchem vorher Dipsacus fullonum kultiviert wurde.

Die hier als Keimhemmungsmittel beschriebenen Auszüge haben viele Vorteile gegenüber den bislang verwendeten:
- sie sind wässrige und / oder wässrig-alkoholische Lösungen
- sie können mit Wasser in jedem Verhältnis verdünnt werden
- die Keimhemmungsmittel und daraus hergestellte Verdünnungen sind durch Tauchen oder Besprühen der Kartoffeln einfach zu applizieren. Besonders vorteilhaft ist die Möglichkeit der Nutzung von herkömmlichen Kartoffeleinlegern mit ebenfalls herkömmlichen Beizeinrichtungen für das Besprühen
- bei Verwendung eines herkömmlichen Kartoffeleinlegers mit Beizeinrichtung kann das Applizieren der Keimhemmungsmittel in einem Arbeitsgang mit dem Einlegen der Kartoffeln erfolgen
- um eine Keimhemmung bei den Erntekartoffeln, den Tochterknollen, zu bewirken, werden nicht diese, sondern die Pflanzkartoffeln, die Mutterknollen, behandelt. Dadurch müssen der Menge nach nur etwa 5 % des Ernteguts behandelt werden
- bei der Applikation der Keimhemmungsmittel besteht wegen der Behandlung der Pflanzkartoffeln keine Abhängigkeit vom Wachstum und / oder Reifegrad der zu erntenden Kartoffeln. Anforderung an Witterungsbedingungen bestehen ebenfalls nicht.
- die Keimung der Pflanzkartoffeln wird durch die Applikation der Keimhemmungsmittel nicht beeinträchtigt, sondern abhängig vom applizierten Keimhemmungsmittel und der Kartoffelsorte in einigen Fällen sogar begünstigt
- der Ertrag an Erntekartoffeln wird durch die Applikation der Keimhemmungsmittel nicht gemindert. Es ist sogar eine Steigerung zu erwarten
- die Keimhemmungsmittel sind selbst bei geringen Wirkstoffgehalten bei unter optimalen Bedingungen gelagerten Erntekartoffeln, den Tochterknollen, hoch wirksam. Erst bei sehr langer Lagerung und höheren Temperaturen tritt Keimung ein
- die Wilde Karde (Dipsacus fullonum) ist in Europa, so auch in Deutschland, weit verbreitet und Bestandteil unseres ökologischen Umfeldes; ihr Anbau stellt keine Umweltbelastung dar
- die Wilde Karde ist eine anspruchslose Pflanze und stellt somit keine aufwendigen Anforderungen an den Anbau
- Anbau und Ernte der Wilden Karde können in Anlehnung an den Getreideanbau erfolgen; es fallen große Mengen an Pflanzenmaterial an, die bis zur Verarbeitung problemlos gelagert werden können
- die Verarbeitung des Pflanzenmaterials zu den erfindungsgemäßen Keimhemmungsmitteln ist mit herkömmlichen technischen Einrichtungen möglich
- keine chemischen Rückstände wie bei Verwendung chemischer Keimhemmungsmittel

Der Auszug ist ein wässriger Auszug. Dies kann beispielsweise der vorstehend beschriebene wässrige Auszug oder der an anderer Stelle beschriebene aus dem erfindungsgemäßen Herstellungsverfahren gewonnene wässrige Auszug sein.

Die Knollenpflanze ist die Kartoffel.

Der vorliegende D. fullonum Auszug kann allein oder als eine von mehreren Behandlungen zur Keimhemmung verwendet werden, z.B. mit einem der bereits bekannten Mittel, wobei vorzugsweise die letzte Behandlung mit dem vorliegenden Auszug erfolgt.

Weiterhin kann der Auszug sofern notwendig noch behandelt werden, um ihn für die automatisierte Anwendung geeignet zu machen. Dies beinhaltet beispielsweise die Abfiltrierung fester Inhaltsstoffe, die andernfalls Düsen verstopfen könnten.

Geeignete Vorrichtungen und Verfahren zum Aufbringen des vorliegenden D. fullonum Auszugs sind bekannt. Ein Beispiel ist in WO90/06059 beschrieben. Ein anderes geeignetes Verfahren wird in US8,178,145 offenbart.

Weiterhin bezieht sich die Erfindung auf die Verwendung eines wässrigen Auszugs aus Dipsacus fullonum als Keimhemmungsmittel in Kartoffeln.

In einer bevorzugten Ausführungsform prägt sich die Keimhemmungseigenschaft in der ersten Tochtergeneration aus.

Verwendung eines wässrigen Auszugs aus Dipsacus fullonum zur Ertragssteigerung von Kartoffelpflanzen.

In einem weiteren Aspekt bezieht sich die Erfindung auf ein Verfahren zur Herstellung eines Auszugs, umfassend
a) Optional Zerkleinerung von Pflanzenteilen der Pflanze Dipsacus fullonum
b) Mischung der zerkleinerten Pflanzenteile aus a) oder von Pflanzenteilen der Pflanze Dispacus fullonum mit Wasser als Extraktionsmittel
c) Reifung der aus b) erhaltenen Masse
d) Abtrennung der festen Bestandteile der Masse zum Erhalten einer flüssigen Phase.

In einer bevorzugten Ausführungsform ist der Auszug der an anderer Stelle beschriebene wässrige Auszug.

In einer weiteren bevorzugten Ausführungsform umfasst das Verfahren weiterhin Aufkonzentrieren oder Verdünnen der flüssigen Phase.

Verfahren zum Aufkonzentrieren sind dem Fachmann bekannt und umfassen beispielsweise die Entfernung von Wasser, Destillation mit Rotationsverdampfern oder Dünnschichtverdampfern.

Die Verdünnung kann grundsätzlich mit Wasser oder einem sonstigen Lösungsmittel erfolgen.

In einer anderen bevorzugten Ausführungsform umfasst das Verfahren weiterhin als Schritt e) die fraktionierte Fällung von Inhaltsstoffen. Entsprechende Verfahren sind dem Fachmann hinlänglich bekannt. Bevorzugt ist die fraktionierte Fällung des wässrigen Auszugs mit einem niederen Alkohol, wie z.B. Ethanol oder Propanol.

In der vorliegenden Erfindung hat sich gezeigt, dass der durch fraktionierte Fällung mit Propanol erhaltene Niederschlag, mit Wasser wieder in Lösung gebracht, ebenfalls die oben beschriebenen Wirkungen hat. Insbesondere zeigt sich eine Keimhemmung.

Entsprechend bezieht sich die Erfindung in einem weiteren Aspekt auf einen durch fraktionierte Fällung weiter aufgereinigten Auszug aus Dipsacus fullonum. Dieser prozessierte Auszug enthält weiterhin keine organischen Lösungsmittel.

Weiterhin bezieht sich die Erfindung auf einen durch das erfindungsgemäße Verfahren erhaltenen Auszug, insbesondere auf einen aus den Schritten b) bis d) erhaltenen Auszug, vorzugsweise auf einen aus den Schritten a) bis d) erhaltenen Auszug. Auch ein aus den Schritten a) bis e) erhaltener Auszug ist bevorzugt. Der Auszug kann nötigenfalls Additive wie z.B. Konservierungsmittel enthalten. Alternativ kann er zur Haltbarmachung auch ultrahocherhitzt werden.

Die Erfindung bezieht sich außerdem auf eine Zusammensetzung enthaltend einen erfindungsgemäßen Auszug sowie ein Verdickungsmittel. Gängige Verdickungsmittel sind dem Fachmann bekannt und umfassen Stärke, derivatisierte Stärke, Cellulose und ihre Derivate, Acrylsäurederivate, Xanthan und hochdisperse Kieselsäure.

Die Figuren zeigen:
Figur 1: Flussdiagramm der Herstellung von Auszüge aus Dipsacus fullonum Blättern (Herba)
Figur 2: Flussdiagramm der Herstellung von Auszüge aus Dipsacus fullonum Samen (Semen)
Figur 3: Flussdiagramm der Herstellung von Auszüge aus Dipsacus fullonum Wurzeln (Radix) Die folgenden Beispiele illustrieren die Erfindung in nicht limitierender Form.

### Beispiel 1: Beispielhaftes Verfahren zur Herstellung von erfindungsgemäss verwendbaren Auszügen sowie daraus hergestellte Verdünnungen.

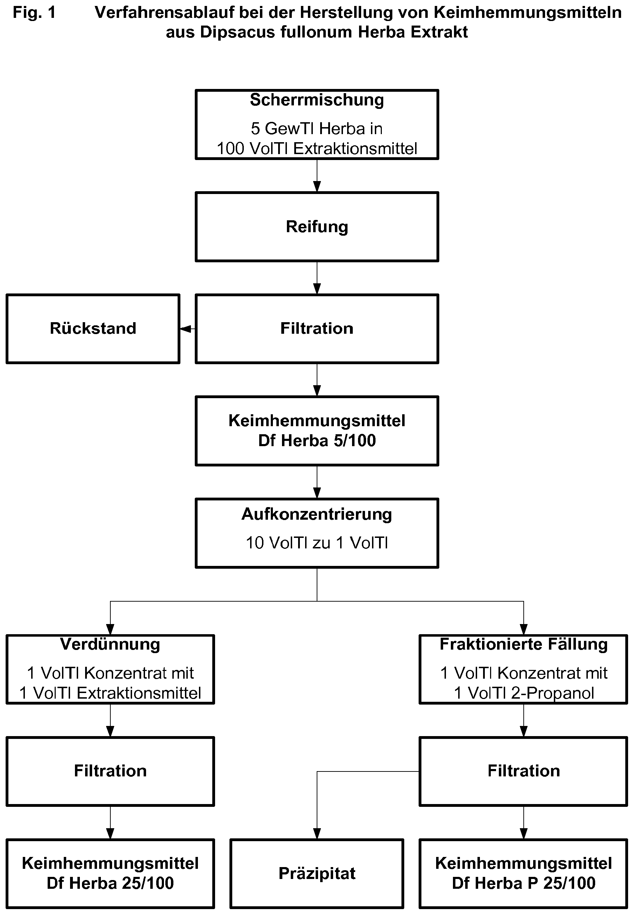

Der Herstellungsablauf für Auszüge aus Dipsacus fullonum Herba ist in Figur 1 als Flussdiagramm dargestellt.

### Gewinnung des Auszugs

50 g bei 40 °C bis zur Gewichtskonstanz getrocknetes gehäckseltes Kraut von feldgetrockneten Dipsacus fullonum Pflanzen werden in einem geeigneten Mischer (zum Beispiel Rommelsbacher Standmixer MX 850 oder Braun Standmixer V4) in 1.000 ml demineralisiertem Wasser zerkleinert. Die Zerkleinerung und Mischung erfolgt zunächst in 800 ml Wasser, 200 ml werden dann beim Entleeren des Mischers zum Spülen hinzugefügt. Die Zerkleinerung erfolgt 3 x 20 Sekunden bei mittlerer und 3 x 20 Sekunden bei höchster Geschwindigkeit. Nach der Zerkleinerung wird der Krautbrei in 1.000 ml Weithals-Vierkantschraubflaschen aus Glas abgefüllt. Der Ansatz wird dann bei Raumtemperatur zur Reifung für 7 Tage gelagert, wobei er erstmals nach 1 Tag, dann alle zwei Tage intensiv geschüttelt wird.

Nach 7 Tagen werden die Ansätze filtriert (z.B. durch Faltenfilter MN 617 1/4 240 mm). Die Filtrate werden in Plastikkanistern gesammelt.

Der so hergestellte Auszug wird Df Herba 5/100 genannt.

Er wird zur Lagerung in Braunglasflaschen abgefüllt oder durch Aufkonzentrierung weiterverarbeitet.

### Aufkonzentrierung und Herstellung der Auszüge Df Herba 25/100, Df Herba P 25/100 und Df Herba Präzipitat 5/100

Jeweils 1.000 ml Df Herba 5/100 werden mittels Rotationsverdampfer zu 100 ml aufkonzentriert. Beispielhafte Bedingungen: Wasserstrahlvakuum, 90 U/min, Heizbad mit 55 °C.

Zur Herstellung von Df Herba 25/100 werden 100 ml Konzentrat mit 100 ml demineralisiertem Wasser zu 200 ml aufgefüllt. Nach 4 Tagen wird filtriert (z.B. Faltenfilter MN 617 1/4 240 mm), um eine in der Regel sehr geringe Menge an ausgefallenem braunen Niederschlag abzutrennen.

Das so hergestellte Filtrat ist der Auszug Df Herba 25/100, welches ausschließlich Wasser als Lösungsmittel enthält.

Es wird zur Lagerung in Braunglasflaschen abgefüllt.

Zur Herstellung von Df Herba P 25/100 werden 100 ml Konzentrat in eine Klarglasflasche gefüllt und mit 100 ml 2-Propanol reinst versetzt. Es tritt sofort eine Fällung von tiefbraunem Niederschlag ein.

2 Tage später wird filtriert (z.B. Rundfilter MN 615 185 mm). Ausbeute am Filtrat aus 1000 ml Ansatz: ca. 850 ml. Der Filterkuchen wird nach 24 Stunden in 200 ml 2-Propanol reinst geschlämmt und 60 Minuten mittels Magnetrührstäbchen auf einem Magnetrührer bei Raumtemperatur gerührt. Dann wird filtriert (z.B. Rundfilter MN 615 185 mm). Das Filtrat wird mit den 850 ml aus der ersten Filtration zu 1.000 ml zusammengefügt.

Das so hergestellte Filtrat ist der Auszug Df Herba P 25/100, welcher mindestens 50% Propanol enthält.

Es wird zur Lagerung in Braunglasflaschen abgefüllt.

Nach weiteren 24 Stunden wird der noch feuchte Filterkuchen in 1.000 ml demineralisiertem Wasser gelöst.

Die so hergestellte wässrige Lösung ist der Auszug Df Herba Präzipitat 5/100. Es wird zur Lagerung in einen Plastikbehälter abgefüllt.

Die Auszüge Df Herba 5/100, Df Herba 25/100, Df Herba P 25/100 und Df Herba Präzipitat 5/100 können weiter verdünnt werden, beispielsweise mit Leitungswasser.

### Zum Beispiel:

100 ml Df Herba 25/100 + 900 ml Wasser zu 1.000 ml Df Herba (Verdünnung 25/1.000)
10 ml Df Herba 25/100 + 990 ml Wasser zu 1.000 ml Df Herba (Verdünnung 25/10.000)

### Beispiel 2: Beispielhaftes Verfahren zur Herstellung anderer erfindungsgemäss verwendbarer Auszüge sowie daraus hergestellte Verdünnungen.

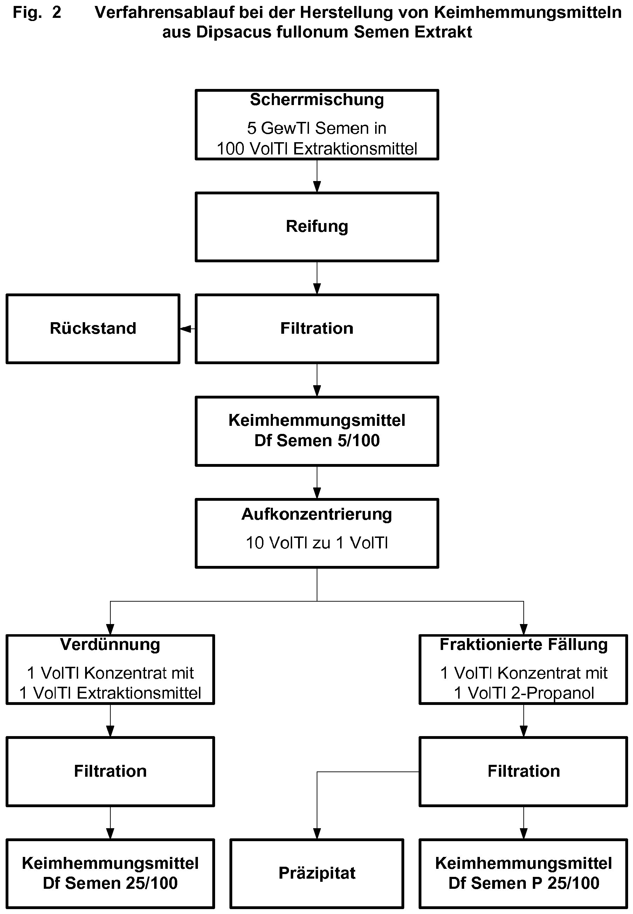

Der Herstellungsablauf für Auszüge aus Dipsacus fullonum Semen ist in Figur 2 als Flussdiagramm dargestellt.

### Gewinnung des Auszugs

50 g bei 40 °C bis zur Gewichtskonstanz getrockneter ausgereifter Dipsacus fullonum Samen werden in einem geeigneten Mischer (zum Beispiel Rommelsbacher Standmixer MX 850 oder Braun Standmixer V4) in 1.000 ml demineralisiertem Wasser zerkleinert. Die Zerkleinerung erfolgt zunächst in 800 ml Wasser, 200 ml werden dann beim Entleeren des Mischers zum Spülen hinzugefügt. Die Zerkleinerung erfolgt 3 x 20 Sekunden bei mittlerer und 3 x 20 Sekunden bei höchster Geschwindigkeit. Nach der Zerkleinerung wird der Samenbrei in 1.000 ml Weithals-Vierkantschraubflaschen aus Glas abgefüllt.

Der Ansatz wird dann bei Raumtemperatur zur Reifung für 7 Tage gelagert, wobei er erstmals nach 1 Tag, dann alle zwei Tage intensiv geschüttelt wird.

Nach 7 Tagen werden die Ansätze filtriert (z.B. durch Faltenfilter MN 617 1/4 240 mm). Die Filtrate werden in Plastikkanistern gesammelt.

Der so hergestellte Auszug wird Df Semen 5/100 genannt.

Er wird zur Lagerung in Braunglasflaschen abgefüllt oder durch Aufkonzentrierung weiterverarbeitet.

### Aufkonzentrierung und Herstellung der Auszüge Df Semen 25/100 und Df Semen P 25/100

Jeweils 1.000 ml Df Semen 5/100 werden mittels Rotationsverdampfer zu 100 ml aufkonzentriert. Bedingungen: Wasserstrahlvakuum, 90 U/min, Heizbad mit 55 °C.

Zur Herstellung von Df Semen 25/100 werden die 100 ml mit 100 ml demineralisiertem Wasser zu 200 ml aufgefüllt. Nach 4 Tagen wird filtriert (z.B. Faltenfilter MN 617 1/4 240 mm), um eine in der Regel sehr geringe Menge an ausgefallenem grauen Niederschlag abzutrennen.

Das so hergestellte Filtrat ist der Auszug Df Semen 25/100, welcher ausschließlich Wasser als Lösungsmittel enthält.

Es wird zur Lagerung in 1.000 ml Braunglasflaschen abgefüllt.

Zur Herstellung von Df Semen P 25/100 werden 100 ml des weiter oben gewonnenen Konzentrats in eine Klarglasflasche gefüllt und mit 100 ml 2-Propanol reinst versetzt. Es tritt sofort eine Fällung von grauem Niederschlag ein.

2 Tage später wird filtriert (z.B. Rundfilter MN 615 185 mm). Ausbeute am Filtrat aus 1000 ml: ca. 850 ml. Der Filterkuchen wird nach 24 Stunden in 200 ml 2-Propanol reinst geschlämmt und 60 Minuten mittels Magnetrührstäbchen auf einem Magnetrührer bei Raumtemperatur gerührt. Dann wird filtriert (Rundfilter MN 615 185 mm). Das Filtrat wird mit den 850 ml aus der ersten Filtration zu 1.000 ml zusammengefügt.

Das so hergestellte Filtrat ist der Auszug Df Semen P 25/100, welcher mindestens 50% Propanol enthält. Er wird zur Lagerung in Braunglasflaschen abgefüllt.

Der Filterkuchen, das graue Präzipitat, wird zu anderweitiger Verwendung weiterverarbeitet.

Die Auszüge Df Semen 5/100, Df Semen 25/100 und Df Semen P 25/100 können weiter verdünnt werden, beispielsweise mit Leitungswasser.

### Zum Beispiel:

100 ml Df Semen 25/100 + 900 ml Wasser zu 1.000 ml Df Semen (Verdünnung 25/1.000)
10 ml Df Semen 25/100 + 990 ml Wasser zu 1.000 ml Df Semen (Verdünnung 25/10.000)

### Beispiel 3: Beispielhaftes Verfahren zur Herstellung weiterer erfindungsgemäss verwendbarer Auszüge sowie daraus hergestellte Verdünnungen.

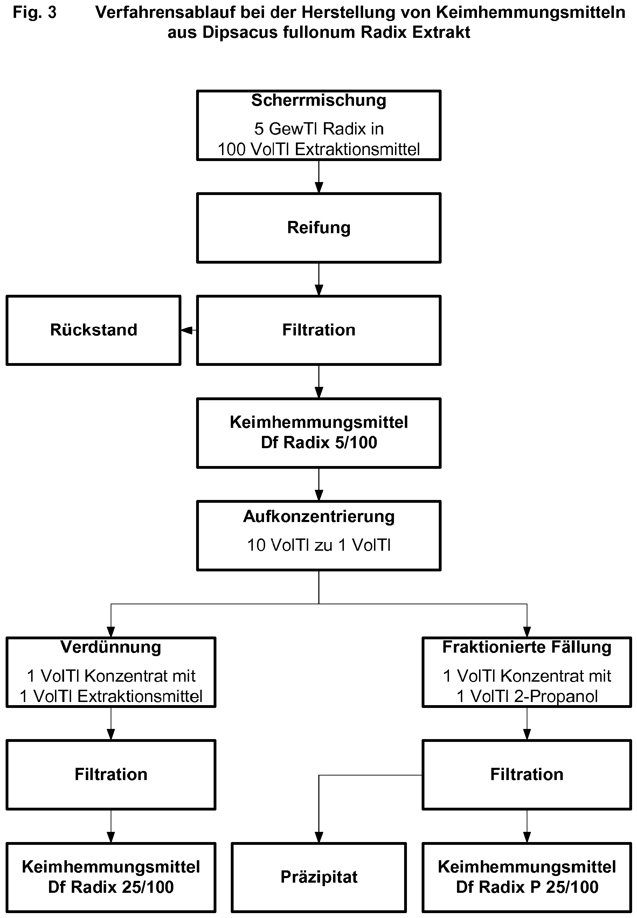

Der Herstellungsablauf für Auszüge aus Dipsacus fullonum Radix ist in Figur 3 als Flussdiagramm dargestellt.

### Gewinnung des Auszugs

50 g bei 40 °C bis zur Gewichtskonstanz getrocknete grob zerkleinerte Wurzeln von feldgetrockneten Dipsacus fullonum Pflanzen werden in einem geeigneten Mischer (zum Beispiel Rommelsbacher Standmixer MX 850 oder Braun Standmixer V4) in 1.000 ml demineralisiertem Wasser zerkleinert. Die Zerkleinerung erfolgt zunächst in 800 ml Wasser, 200 ml werden dann beim Entleeren des Mischers zum Spülen hinzugefügt. Die Zerkleinerung erfolgt 3 x 20 Sekunden bei mittlerer und 3 x 20 Sekunden bei höchster Geschwindigkeit. Nach der Zerkleinerung wird der Wurzelbrei in Weithals-Vierkantschraubflaschen aus Glas abgefüllt. Der Ansatz wird dann bei Raumtemperatur zur Reifung für 7 Tage gelagert, wobei er erstmals nach 1 Tag, dann alle zwei Tage intensiv geschüttelt wird.

Nach 7 Tagen werden die Ansätze filtriert (z.B. durch Faltenfilter MN 617 1/4 240 mm). Die Filtrate werden in Plastikkanistern gesammelt.

Das so hergestellte Filtrat ist der Auszug Df Radix 5/100.

Es wird zur Lagerung in Braunglasflaschen abgefüllt oder durch Aufkonzentrierung weiterverarbeitet.

### Aufkonzentrierung und Herstellung der Auszüge Df Radix 25/100 und Df Radix P 25/100

Jeweils 1.000 ml Df Radix 5/100 werden mittels Rotationsverdampfer zu 100 ml aufkonzentriert.

Bedingungen: Wasserstrahlvakuum, 90 U/min, Heizbad mit 55 °C.

Zur Herstellung des Auszugs Df Radix 25/100 werden die 100 ml werden mit 100 ml demineralisiertem Wasser zu 200 ml aufgefüllt. Nach 4 Tagen wird filtriert (z.B. Faltenfilter MN 617 1/4 240 mm), um eine in der Regel sehr geringe Menge an ausgefallenem grauen Niederschlag abzutrennen.

Das so hergestellte Filtrat ist der Auszug Df Radix 25/100, welcher nur Wasser als Lösungsmittel enthält. Es wird zur Lagerung in Braunglasflaschen abgefüllt.

Zur Herstellung des Auszugs Df Radix P 25/100 werden 100 ml des oben gewonnenen Konzentrats in eine Klarglasflasche gefüllt und mit 100 ml 2-Propanol reinst versetzt. Es tritt sofort eine Fällung von tiefbraunem Niederschlag ein.

2 Tage später wird filtriert (z.B. Rundfilter MN 615 185 mm). Ausbeute am Filtrat: ca. 850 ml. Der Filterkuchen wird nach 24 Stunden in 200 ml 2-Propanol reinst geschlämmt und 60 Minuten mittels Magnetrührstäbchen auf einem Magnetrührer bei Raumtemperatur gerührt. Dann wird filtriert (z.B. Rundfilter MN 615 185 mm). Das Filtrat wird mit den 850 ml aus der ersten Filtration zu 1.000 ml zusammengefügt.

Das so hergestellte Filtrat ist der Auszug Df Radix P 25/100, welcher mindestens 50% Propanol enthält. Er wird zur Lagerung in Braunglasflaschen abgefüllt.

Der Filterkuchen, das braun-schwarze Präzipitat, wird zu anderweitiger Verwendung weiterverarbeitet.

Die Auszüge Df Radix 5/100, Df Radix 25/100 und Df Radix P 25/100 können weiter verdünnt werden, beispielsweise mit Leitungswasser. Zum Beispiel:
100 ml Df Radix 25/100 + 900 ml Wasser zu 1.000 ml Df Radix (Verdünnung 25/1.000)
10 ml Df Radix 25/100 + 990 ml Wasser zu 1.000 ml Df Radix (Verdünnung 25/10.000)

### Beispiel 4: Wirkung von Dipsacus fullonum Auszügen auf die Keimung von Pflanzkartoffeln verschiedener Sorten.

### a) Df Herba P 25/100, Df Semen P 25/100 und Df Radix P 25/100 bei Annabelle

### Versuchsdurchführung:

Bio-Pflanzkartoffeln (je 9 Knollen) der Sorte Annabelle (zertifiziertes Pflanzgut; DE034-906013973001, Sortierung 30 / 50 mm) wurden durch Besprühen wie folgt behandelt (Angaben in Klammern beziehen sich auf das Verhältnis von Menge an Auszug in g zu Kartoffelgewicht in g);

| | |
|---|---|
| Probe A: | Leitungswasser; durchschnittliche Wasseraufnahme 0,44 g pro Kartoffel (ca. 0,73 %). |
| Probe B: | Df Herba P 25/100; durchschnittliche Wasseraufnahme 0,32 g pro Kartoffel (ca. 0,44 %). |
| Probe C: | Df Semen P 25/100; durchschnittliche Wasseraufnahme 0,29 g pro Kartoffel (ca. 0,47 %). |
| Probe D: | Df Radix P 25/100; durchschnittliche Wasseraufnahme 0,36 g pro Kartoffel (ca. 0,52 %). |

Nach der Applizierung der Auszüge wurden die Kartoffeln bei 22 +/- 2 °C, 40 +/- 5 % rel. Feuchte gelagert.

Nach 18 Tagen wurde die durchschnittliche Zahl der Keime pro Kartoffel dokumentiert: Probe A: 3,5 Keime; Probe B: 3,9 Keime; Probe C: 3,4 Keime; Probe D: 2,4 Keime.

Die Auszüge Df Herba P 25/100 und Df Semen P 25/100 bewirken keine, der Auszug Df Radix P 25/100 eine schwache Keimhemmung an den behandelten Kartoffeln.

### b) Df Herba P 25/100 und Df Semen P 25/100 in der Verdünnung 25/1.000 bei Annabelle

### Versuchsdurchführung:

Speisekartoffeln (je 3 Knollen) der Sorte Annabelle wurden durch Tauchen, 30 Sekunden, wie folgt behandelt:
Probe A: Leitungswasser
Probe B: Df Herba P Verdünnung 25/1.000
Probe C: Df Semen P Verdünnung 25/1.000

Nach der Applizierung der Auszüge wurden die Kartoffeln bei 22 +/- 2 °C, 40 +/- 5 % rel. Feuchte gelagert. Nach 50 Tagen wurde die durchschnittliche Zahl der Keime pro Kartoffel dokumentiert: Probe A: 2,3 Keime; Probe B: 3,0 Keime; Probe C: 2,7 Keime.

### c) Df Herba P 25/100 und Df Semen P 25/100 in der Verdünnung 25/1.000 bei Mayan Twillight

### Versuchsdurchführung:

Speisekartoffeln (je 3 Knollen) der Sorte Mayan Twilight wurden durch Tauchen, 30 Sekunden, wie folgt behandelt;
Probe A: Leitungswasser
Probe B: Df Herba P Verdünnung 25/1.000
Probe C: Df Semen P Verdünnung 25/1.000

Nach der Applizierung der Auszüge wurden die Knollen bei 22 +/- 2 °C, 40 +/- 5 % rel. Feuchte gelagert. Nach 50 Tagen wurde die durchschnittliche Zahl der Keime pro Knolle dokumentiert: Probe A: 1,0 Keime; Probe B: 2,7 Keime; Probe C: 2,0 Keime.

### d) Df Herba P 25/100 und Df Semen P 25/100 in der Verdünnung 25/1.000 bei der Bamberger Krumbeere

### Versuchsdurchführung:

Speisekartoffeln (je 3 Knollen) der Sorte Bamberger Krumbeere wurden durch Tauchen, 30 Sekunden, wie folgt behandelt;
Probe A: Leitungswasser
Probe B: Df Herba P Verdünnung 25/1.000
Probe C: Df Semen P 25/100 Verdünnung 25/1.000

Nach der Applizierung der Auszüge wurden die Knollen bei 22 +/- 2 °C, 40 +/- 5 % rel. Feuchte gelagert. Nach 50 Tagen wurde die durchschnittliche Zahl der Keime pro Knolle dokumentiert: Probe A: 1,76 Keime; Probe B: 2,0 Keime; Probe C: 1,7 Keime.

### e) Df Semen P 25/100 in den Verdünnung 25/1.000 und 25/10.000 bei Belinda

### Versuchsdurchführung:

Speisekartoffeln (je 5 Knollen) der Sorte Belinda wurden durch Tauchen, 20 Minuten, wie folgt behandelt;
Probe A: Leitungswasser
Probe B: Df Semen P Verdünnung 25/1.000
Probe C: Df Semen P Verdünnung 25/10.000

Nach der Applizierung der Auszüge wurden die Knollen bei 22 +/- 2 °C, 40 +/- 5 % rel. Feuchte gelagert. Nach 109 Tagen wurde die durchschnittliche Zahl der Keime pro Knolle dokumentiert: Probe A: 4,2 Keime; Probe B: 4,2 Keime; Probe C: 4,2 Keime.

### f) Df Semen P 25/100 in den Verdünnungen 25/1.000 und 25/10.000 bei Solara

### Versuchsdurchführung:

Speisekartoffeln (je 5 Knollen) der Sorte Solara wurden durch Tauchen, 20 Minuten, wie folgt behandelt;
Probe A: Leitungswasser
Probe B: Df Semen P Verdünnung 25/1.000
Probe C: Df Semen P Verdünnung 25/10.000

Nach der Applizierung der Auszüge wurden die Knollen bei 22 +/- 2 °C, 40 +/- 5 % rel. Feuchte gelagert. Nach 109 Tagen wurde die durchschnittliche Zahl der Keime pro Knolle dokumentiert: Probe A: 3,7 Keime; Probe B: 6,0 Keime; Probe C: 5,0 Keime.

### Beispiel 5: Wirkung eines Dipsacus fullonum Auszugs auf die Keimung von Pflanzkartoffeln (Mutterknollen) und der Erntekartoffeln (Tochterknollen) der Sorte Annabelle.

### Versuchsdurchführung:

Bio-Pflanzkartoffeln (je 10 Knollen) der Sorte Annabelle (zertifiziertes Pflanzgut; DE034-906013973001, Sortierung 30 / 50 mm) wurden durch Tauchen, 30 Sekunden, wie folgt behandelt:
Probe A: Leitungswasser; durchschnittliche Wasseraufnahme 0,51 g pro Kartoffel (ca. 0,9 %)
Probe B: Df Semen 5/100, durchschnittliche Wasseraufnahme 0,40 g pro Kartoffel (ca. 0,7 %)

Nach der Applizierung der Auszüge wurden die Kartoffeln bei 12 +/- 4 °C, 50 +/- 5 % rel. Feuchte gelagert. Keimentwicklung:
Nach 83 Tagen waren mehrere Keime pro Kartoffel mit bis zu 140 mm Länge zu sehen.

### Pflanzung:

Die Pflanzung der Kartoffeln erfolgte im Ende April durch Einlegen von je 10 Knollen in Teilflächen von je 1 m², die Ernte Ende August des Jahres.

### Lagerung:

Die Kartoffeln wurden in den Monaten September, Oktober und November zunächst in einem trockenen Raum mit Temperaturen entsprechend den Außentemperaturen gelagert. Danach erfolgte die Lagerung in einem trockenen Raum mit Temperaturen zwischen 7 °C und 19 °C.

### Keimung bei Lagerung:

| | |
|---|---|
| Probe A: | alle Kartoffeln hatten bis Ende November, also innerhalb von 3 Monaten, Keime entwickelt. |
| Probe B: | keine Keimentwicklung bis Ende November, weiter keine Keimentwicklung bis Mitte März des folgenden Jahres, also nach 200 Tagen Lagerung. Davon zunächst etwa 100 Tage bei Temperaturen > 15 °C und dann etwa 100 Tage bei Temperaturen zwischen 7 °C und 19 °C. |

Anschließend wurde überprüft, ob die Kartoffeln der Probe B noch keimfähig sind. Versuchsbeginn Mitte Dezember: Knollen der Probe A mit kurzen Keimen, Knollen der Probe B ohne Keime. Anfang März des darauffolgenden Jahres, 86 Tage nach Versuchsbeginn: Knollen der Probe A mit sehr langen Keimen, Knollen der Probe B mit kurzen Keimen.

### Beispiel 6: Keimhemmende Wirkung der Dipsacus fullonum Auszüge bei Erntekartoffeln (Tochterknollen) der Sorte Annabelle.

### Applikation der Auszüge

Bio-Pflanzkartoffeln (je 9 Knollen) der Sorte Annabelle (zertifiziertes Pflanzgut: DE 035-906048173004; Sortierung 30/50 mm) wurden durch vollständiges Besprühen, Abtropfen und Ablüften wie folgt behandelt:

| | |
|---|---|
| Probe A | Vergleich, Leitungswasser |
| Probe B | Df H 5/100 |
| Probe C | Df R 5/100 |
| Probe D | DfSe 5/100 |
| Probe E | Df H Präzipitat 5/100 |

Nach der Applizierung der Auszüge wurden die Kartoffeln bis zur Pflanzung 12 Tage bei Raumtemperatur (ca. 22 °C)gelagert.

### Pflanzung und Ernte

Die Pflanzung der keimfreien Knollen erfolgte Ende April, die Ernte nach einer Vegetationsperiode von 90 Tagen Ende Juli des Jahres.

### Lagerung

Eine Teilmenge der geernteten Kartoffeln wurden in den Monaten September, Oktober und November zunächst in einem trockenen Raum mit Temperaturen entsprechend den Außentemperaturen gelagert. Danach erfolgte die Lagerung in einem trockenen Raum mit Temperaturen zwischen 7 °C und 19 °C.

### Keimhemmung

Die Knollen der Proben wurden in regelmäßigen Abständen auf die Keimung kontrolliert.

Auswirkungen auf die Keimung nach 154 Tagen Lagerung sind in der Tabelle 6 aufgelistet. Ausgezählt wurden jeweils 20 Tochterknollen. Die Tabelle belegt eine deutliche Wirkung der erfindungsgemäßen Auszüge auf die Keimung.

**Tabelle 6 - Keimhemmung von Df Auszügen**

| Probe | Zahl der Tochterknollen mit Keim | |
|---|---|---|
| | Stück | in % |
| A | 9 | 45 |
| B | 1 | 5 |
| C | 1 | 5 |
| D | 1 | 5 |
| E | 0 | 0 |

Zusammenfassung: Die Ergebnisse der Versuche aus den Beispielen 4 bis 6 belegen, dass die erfindungsgemäßen Auszüge keine direkte keimhemmende Wirkung auf die direkt damit behandelten Knollen, wohl jedoch auf die daraus entstehenden Tochterknollen haben. Die Keimhemmung hält über mehrere Monate an und ist reversibel.

### Beispiel 7: Ertrag aus erfindungsgemäß behandelten Kartoffeln im Vergleich zu unbehandelten Kartoffeln.

### Applikation der Auszüge

Bio-Pflanzkartoffeln (je 9 Knollen) der Sorte Annabelle (zertifiziertes Pflanzgut: DE 035-906048173004; Sortierung 30/50 mm) wurden durch vollständiges Besprühen, Abtropfen und Ablüften wie folgt behandelt:

| | |
|---|---|
| Probe A | Leitungswasser (LW) |
| Probe B | Df H 25/100 |
| Probe C | Df R 25/100 |
| Probe D | Df Se 25/100 |

Nach Aufbringen der Proben wurden die Kartoffeln bis zur Pflanzung 12 Tage bei Raumtemperatur (ca. 22 °C) gelagert.

### Pflanzung und Ernte

Die Pflanzung der keimfreien Knollen erfolgte Ende April, die Ernte nach einer Vegetationsperiode von 90 Tagen Ende Juli des Jahres.

Die Ergebnisse in der Tabelle 7 belegen eine deutliche Ertragssteigerung für die Proben B bis D im Vergleich zur Probe A.

**Tabelle 7 Sorte Annabelle**

| Probe | Anzahl Knollen | Anzahl Tochterknollen | | Gesamtgewicht Tochterknollen | |
|---|---|---|---|---|---|
| | | Stück | in % | Gewicht [g] | in % |
| A | 9 | 108 | 100 | 3.910 | 100 |
| B | 9 | 170 | 157 | 5.956 | 152 |
| C | 9 | 148 | 137 | 5.430 | 139 |
| D | 9 | 156 | 144 | 5.357 | 137 |

### Beispiel 8: Ertrag aus erfindungsgemäß mit Auszügen unterschiedlicher Konzentration behandelten Kartoffeln

### Applikation der Auszüge

Bio-Pflanzkartoffeln (je 9 Knollen) der Sorte Annabelle (zertifiziertes Pflanzgut: DE 035-906048173004; Sortierung 30/50 mm) wurden durch vollständiges Besprühen, Abtropfen und Ablüften wie folgt behandelt:

| | |
|---|---|
| Probe A: | Leitungswasser (LW) |
| Probe BDf H | 25/100 |
| Probe CDf H | 5/100 |
| Probe D | Df H 5/1.000 |
| Probe E Df R | 25/100 |
| Probe F Df R | 5/100 |
| Probe G | Df R 5/1.000 |
| Probe H | Df Se 25/100 |
| Probe I | Df Se 5/100 |
| Probe J Df | Se 5/1.000 |

Nach Aufbringen der Auszüge wurden die Kartoffeln bis zur Pflanzung 12 Tage bei Raumtemperatur (ca. 22 °C) gelagert.

### Pflanzung und Ernte wie in Beispiel 7.

### Ertragssteigerung

Die Ergebnisse in Tabelle 8 belegen eine deutliche Ertragssteigerung für die Proben B bis J im Vergleich zur Probe A unabhängig von Ursprung und Konzentration des Auszugs.

**Tabelle 8**

| Probe | Anzahl Tochterknollen | | Gesamtgewicht Tochterknollen | |
|---|---|---|---|---|
| | Stück | in % | Gewicht [g] | in % |
| A | 108 | 100 | 3.910 | 100 |
| B | 170 | 157 | 5.956 | 152 |
| C | 168 | 156 | 6.181 | 158 |
| D | 192 | 178 | 6.671 | 171 |
| E | 148 | 137 | 5.430 | 139 |
| F | 152 | 141 | 5.123 | 131 |
| G | 143 | 132 | 5.643 | 144 |
| H | 156 | 144 | 5.430 | 139 |
| I | 154 | 143 | 5.627 | 144 |
| J | 157 | 145 | 5.730 | 147 |

### Beispiel 9: Wirkung der Dipsacus fullonum Auszüge auf die Ertragssteigerung von Pflanzkartoffeln in Abhängigkeit von der Applikation

### Applikation der Auszüge

Bio-Pflanzkartoffeln (je 9 Knollen) der Sorte Annabelle (zertifiziertes Pflanzgut: DE 035-906048173004; Sortierung 30/50 mm) wurden wie folgt behandelt:

| | |
|---|---|
| Behandlung A: | Besprühen, Abtropfen und Ablüften der Knollen, bis zur Pflanzung 12 Tage Lagerung bei Raumtemperatur |
| Behandlung B: | Besprühen der Knollen auf dem Feld, danach direktes Einlegen der Knollen in die Erde |

mit jeweils folgenden Mitteln: Leitungswasser (LW), Df H 5/100 (H), Df R 5/100 (R) und Df Se (S) 5/100.

### Pflanzung und Ernte

Die Pflanzung der keimfreien Knollen erfolgte im Fall der Vorbehandlung Ende April, die Ernte nach einer Vegetationsperiode von 90 Tagen Ende Juli des Jahres, im Fall der Feldbehandlung Anfang Mai, die Ernte nach einer Vegetationsperiode von 84 Tagen Ende Juli des Jahres

### Ertragssteigerung

Die Ergebnisse in Tabelle 9 belegen sowohl für die Vorbehandlung als auch für die Feldbehandlung eine deutliche Ertragssteigerung durch die Auszüge Df H 5/100, Df R 5/100 und Df Se 5/100, die im Wesentlichen aus einer höheren Zahl der Tochterknollen resultiert.

**Tabelle 9 Sorte Annabelle**

| Applikation/ | Anzahl Tochterknollen | | Gesamtgewicht Tochterknollen | |
|---|---|---|---|---|
| Mittel | Stück | in % | Gewicht [g] | in % |
| A/LW | 108 | 100 | 3.910 | 100 |
| B/LW | 113 | 100 | 3.614 | 100 |
| A/H | 168 | 156 | 6.181 | 158 |
| B/H | 176 | 156 | 5.400 | 149 |
| A/R | 152 | 141 | 5.123 | 131 |
| B/R | 144 | 127 | 5.432 | 150 |
| A/S | 154 | 143 | 5.627 | 144 |
| B/S | 158 | 140 | 5.445 | 151 |

### Beispiel 10: Wirkung der Dipsacus fullonum Auszüge auf die Ertragssteigerung von Speisekartoffeln der Sorten Belinda und Nandina

### Applikation der Auszüge

Speisekartoffel (je 9 Knollen) der Sorte Belinda und Sorte Nandina wurden durch vollständiges Besprühen, Abtropfen und Ablüften wie folgt behandelt:

| Probe A: | Vergleich, Leitungswasser |
|---|---|
| Probe B | Df H P 25/100 |
| Probe C | Df Se P 25/100 |

Nach Aufbringen der Auszüge wurden die Kartoffeln bis zur Pflanzung 59 Tage bei Raumtemperatur (ca. 22 °C)gelagert.

### Pflanzung und Ernte

Die Pflanzung der Knollen mit wenigen Keimen erfolgte Ende April, die Ernte nach einer Vegetationsperiode von 90 Tagen Ende Juli des Jahres.

### Ertragssteigerung

Die Ergebnisse in den Tabellen 10.1 und 10.2 belegen eine deutliche Ertragssteigerung für die Proben B und C im Vergleich zur Probe A.

**Tabelle 10.1 - Sorte Belinda**

| Probe | Anzahl Tochterknollen | | Gesamtgewicht der Tochterknollen | |
|---|---|---|---|---|
| | Stück | in % | Gewicht [g] | in % |
| A | 68 | 100 | 5.559 | 100 |
| B | 75 | 110 | 6.777 | 122 |
| C | 83 | 122 | 7.771 | 140 |

**Tabelle 10.2 - Sorte Nandina**

| Probe | Anzahl Tochterknollen | | Gesamtgewicht der Tochterknollen | |
|---|---|---|---|---|
| | Stück | in % | Gewicht [g] | in % |
| A | 80 | 100 | 5.931 | 100 |
| B | 111 | 140 | 8.953 | 151 |
| C | 102 | 128 | 7.290 | 123 |

### Beispiel 11: Wirkung der Dipsacus fullonum Auszüge auf die Ertragssteigerung von Stärkekartoffeln der Sorte Axion

### Applikation der Auszüge

Stärkekartoffeln (je 9 Knollen) der Sorte Axion wurden durch vollständiges Besprühen, Abtropfen und Ablüften wie folgt behandelt:

| Probe A: | Vergleich, Leitungswasser |
|---|---|
| Probe BDf | H 25/100 |
| Probe CDf R | 25/100 |
| Probe D | Df Se 25/100 |
| Probe EDf Se | P 25/100 |

Nach Aufbringen der Mittel wurden die Kartoffeln bis zur Pflanzung 1 Tag bei Raumtemperatur (ca. 22 °C) gelagert.

### Pflanzung und Ernte

Die Pflanzung der keimfreien Knollen erfolgte Anfang Mai, die Ernte nach einer Vegetationsperiode von 84 Tagen Ende Juli des Jahres.

### Ertragssteigerung

Die Ergebnisse in der Tabelle 11 belegen eine deutliche Ertragssteigerung für die Proben B bis E im Vergleich zur Probe A.

**Tabelle 11 - Sorte Axion**

| Probe | Anzahl Tochterknollen | | Gesamtgewicht der Tochterknollen | |
|---|---|---|---|---|
| | Stück | in % | Gewicht [g] | in % |
| A | 92 | 100 | 3.895 | 100 |
| B | 125 | 136 | 6.305 | 162 |
| C | 111 | 121 | 6.650 | 171 |
| D | 110 | 119 | 4.659 | 120 |
| E | 120 | 130 | 5.167 | 132 |

### Beispiel 12: Wirkung einer Dipsacus fullonum Vorfrucht auf den Ertrag von Speisekartoffeln

### Versuchsdurchführung

Kartoffeln (je 9 Knollen) der Sorte Annabelle und Sorte Bamberger Krumbeere wurden auf einer Anbaufläche gepflanzt, auf der im Vorjahr Dipsacus fullonum Pflanzen abgeerntet wurden. Bei dieser Abernte verblieb ein Großteil der Feinwurzeln im Boden.

Zum Vergleich wurden Kartoffeln herangezogen, die auf einer Anbaufläche ohne Dipsacus fullonum Vorfrucht gepflanzt worden waren.

Die Ergebnisse in der Tabelle 12 belegen für beide Sorten eine deutliche Ertragssteigerung. Bei der Bamberger Krumbeere ist zudem das gute Aussehen der Knollen bemerkenswert.

**Tabelle 12 - Wirkung einer Dipsacus fullonum Vorfrucht**

| Kartoffelsorte | Zahl der Tochterknollen | | Gesamtgewicht der Tochterknollen | |
|---|---|---|---|---|
| | Stück | in % | Gewicht [g] | in % |
| Annabelle | | | | |
| Vergleich | 108 | 100 | 3.910 | 100 |
| Vorfrucht | 110 | 102 | 5.781 | 148 |

| Bamberger Krum. | | | | |
|---|---|---|---|---|
| Vergleich | 99 | 100 | 2.692 | 100 |
| Vorfrucht | 137 | 138 | 3.139 | 117 |

## Patentansprüche

1. Verfahren zur Keimhemmung von Tochterknollen einer Kartoffelpflanze, umfassend Aufbringen eines wässrigen Auszugs aus Dipsacus fullonum auf mindestens eine Mutterknolle, Gewinnung von Tochterknollen aus der Mutterknolle.

2. Verfahren zur Ertragssteigerung von Knollen einer Kartoffelpflanze, umfassend Aufbringen eines wässrigen Auszugs aus Dipsacus fullonum auf mindestens eine Knolle.

3. Verfahren gemäß Anspruch 1 oder 2, wobei der Auszug kein organisches Lösungsmittel enthält.

4. Verfahren gemäß einem der Ansprüche 1 bis 3, **dadurch gekennzeichnet, dass** das Aufbringen des Auszugs mittels Tauchen oder Besprühen oder als Beizung vor dem Ausbringen der Knolle ins Erdreich erfolgt.

5. Verfahren zur Ertragssteigerung von Knollen einer Kartoffelpflanze, umfassend Anbau von Dipsacus fullonum auf einem Feld vor Anbau der Kartoffelpflanze.

6. Verwendung eines wässrigen Auszugs aus Dipsacus fullonum als Keimhemmungsmittel für Kartoffeln.

7. Verwendung eines wässrigen Auszugs aus Dipsacus fullonum zur Ertragssteigerung von Kartoffelpflanzen.

8. Verfahren zur Herstellung eines wässrigen Auszugs, umfassend
a) Zerkleinerung von Pflanzenteilen der Pflanze Dipsacus fullonum
b) Mischung der zerkleinerten Pflanzenteile aus a) mit Wasser als Extraktionsmittel
c) Reifung der aus b) erhaltenen Masse bei Raumtemperatur
d) Abtrennung der festen Bestandteile der Masse zum Erhalten einer flüssigen Phase.

9. Verfahren gemäß Anspruch 8, weiter umfassend fraktionierte Fällung von Inhaltsstoffen.

## Claims

1. Method for sprouting inhibition of daughter tubers of a poptato plant, comprising application of an aqueous extract from Dipsacus fullonum onto at least one mother tuber, obtaining of daughter tubers from the mother tuber.

2. Method for increasing the yield of tubers of a potato plant, comprising application of an aqueous extract from Dipsacus fullonum onto at least one tuber.

3. Method according to claim 1 or 2, wherein the extract does not contain an organic solvent.

4. Method according to any one of claims 1 to 3, **characterized in that** the application of the extract is effected by dipping or spraying or as treatment of the tuber prior to bringing the tuber into the soil.

5. Method for increasing the yield of a potato plant, comprising cultivation of Dipsacus fullonum in a field prior to cultivation of said potato plant.

6. Use of an aqueous extract from Dipsacus fullonum as sprouting inhibitor for potatos.

7. Use of an aqueous extract from Dipsacus fullonum for increasing the yield of potato plants.

8. Method for producing an aqueous extract, comprising
a) Grinding of plant parts of the plant Dipsacus fullonum
b) Mixing of the ground plant parts from a) with water as extractant
c) Ripening of the matter obtained from b) at room temperature
d) Separation of the solid components to obtain a liquid phase.

9. Method according to claim 8, further comprising fractionated precipitation of ingredients.

## Revendications

1. Procédé pour l'inhibition de germination de tubercules filles d'un plant de pomme de terre, comprenant l'application d'un extrait aqueux de Dipsacus fullonum à au moins un tubercule mère, l'obtention de tubercules filles à partir du tubercule mère.

2. Procédé pour augmenter le rendement des tubercules d'une pomme de terre, comprenant l'application d'un extrait aqueux de Dipsacus fullonum à au moins un tubercule.

3. Procédé selon la revendication 1 ou 2, dans lequel l'extrait ne contient pas de solvant organique.

4. Procédé selon l'une quelconque des revendications 1 à 3, **caractérisé en ce que** l'extrait est appliqué par trempage ou pulvérisation ou en pansement avant la mise en terre du tubercule.

5. Procédé pour augmenter le rendement des tubercules d'un plant de pomme de terre, comprenant la culture de Dipsacus fullonum dans un champ avant de cultiver le plant de pomme de terre.

6. Utilisation d'un extrait aqueux de Dipsacus fullonum comme inhibiteur de germination pour les pommes de terre.

7. Utilisation d'un extrait aqueux de Dipsacus fullonum pour augmenter le rendement des plants de pomme de terre..

8. Procédé de fabrication d'un extrait aqueux comprenant
a) dèsintegration des parties vegetales de la plante Dipsacus fullonum
b) mélanger les parties végétales dèsintegrées de a) avec de l'eau comme extractant
c) maturation de la masse obtenue à partir de b) à température ambiante
d) séparation des composants solides de la masse pour obtenir une phase liquide Phase.

9. Procédé selon la revendication 8, comprenant en outre une précipitation fractionnée des ingrédients.
